# EUROPEAN PATENT SPECIFICATION

(11) **EP 2 418 756 B1**
(45) Date of publication and mention of the grant of the patent: **08.07.2015**
(21) Application number: 10196712.3
(22) Date of filing: 23.12.2010
(51) Int. Cl.: H02K 1/27, H02K 1/32

(54) **Permanent magnet rotating electric machine**
Machine électrique tournante à aimants permanents
Rotierende elektrische Maschine mit Permanentmagneten

(30) Priority: 09.08.2010 JP 2010178298
(43) Date of publication of application: 15.02.2012
(73) Proprietor: Hitachi, Ltd., Chiyoda-ku, Tokyo 100-8280 (JP)
(72) Inventor: Hori, Masahiro, Tokyo 100-8220 (JP); Kori, Daisuke, Tokyo 100-8220 (JP); Komura, Akiyoshi, Tokyo 100-8220 (JP); Masuda, Seikichi, Tokyo 100-8220 (JP); Kimura, Mamoru, Tokyo 100-8220 (JP); Obata, Nobuhiko, Tokyo 100-8220 (JP); Koizumi, Takayuki, Tokyo 100-8220 (JP)
(74) Representative: Beetz & Partner mbB

(56) References cited:
- EP-A1- 1 953 896
- EP-A2- 1 914 863
- WO-A2-2009/014742
- DE-A1-102006 011 729
- DE-A1-102008 020 138

## Description

### FIELD OF THE INVENTION

The present invention relates to a permanent magnet rotating machine and, more particularly, to a permanent magnet rotating machine suitable as a rotating machine having a medium or large capacity such as a wind turbine generator or a generator mounted on a vehicle.

### BACKGROUND OF THE INVENTION

As rotating machines have been compact and highly efficient, permanent magnet rotating machines have been used in various fields in recent years. When permanent magnets are used, however, there is a problem in that not only electrical characteristics but also strength characteristics are restricted.

In particular, rotating machines with an output capacity in the several megawatt class, such as generators mounted in railroad vehicles and wind turbine generators, use large quantities of permanent magnets, so restrictions on strength characteristics become prominent. With railroad generators, which are connected directly to engines, vibration and shock caused by the engines and during running are applied to the generators, so high strength characteristics are demanded. With wind turbine generators, the service life of which is assumed to be about 20 years, so longterm durability is demanded.

To respond to this situation, conventional technologies for permanent magnet rotating machines that are compact, highly efficient, and highly reliable are disclosed in Patent Documents 1 to 3.

### (Document of Prior Art)

Patent Document 1:
   Japanese Patent Laid-open No. 2005-86955
Patent Document 2:
   Japanese Patent Laid-open No. 2006-311730
Patent Document 3:
   Japanese Patent Laid-open No. 2009-153353

### SUMMARY OF THE INVENTION

In Patent Document 1 above, to increase efficiency, gaps between the rotator and stator are increased near parts between magnetic poles, in comparison with a region near the center of the magnetic pole to prevent magnetic flux concentration and reduce harmonic components included in magnetomotive force waveforms.

When the gap between the rotor and stator is increased near parts between magnetic poles, however, the advantage of the salience structure of the rotating machine may be reduced and reluctance torque may also be reduced. The iron core (bridge on the internal diameter side) between two magnet insertion slots provided for one pole is under high stress due to centrifugal force. Therefore, stress exerted on the bridge may not be reduced just by providing a bridge between magnet insertion slots to divide the magnet insertion slots as described in a second embodiment in Patent Document 1, and thus an effect to reduce peak stress may be small.

In Patent Document 2, peak stress is reduced by preventing corners of a magnet embedded in a rotor iron core from being locally brought into contact with the rotor core.

Since the distance between an end of each magnet insertion slot on the external diameter side of the rotor and the outer circumference of the rotor is not constant, however, stress may concentrate at the shortest distance and thereby peak stress may be increased. Furthermore, the magnet insertion slot is shaped so that the corners of the magnet are not brought into contact, the cross sectional area of the iron core (bridge on the external diameter side) between the end of the magnet insertion slot on the external diameter side of the rotor and the outer circumference of the rotor is increased, so leakage magnetic fluxes, which cause a shorting between magnetic fluxes through the bridge on the external diameter side, may be increased and thereby the electrical characteristics may be worsened.

In Patent Document 3, leakage magnetic fluxes of magnets are reduced by restricting directions in which the magnets are magnetized.

When directions in which magnets are magnetized are restricted as in Patent Document 3, however, the magnets are not uniformly magnetized, as in a case in which flat plate magnets are magnetized. To achieve uniform magnetization, a specific mold is needed, resulting in a high cost. It can also be considered that a magnet cannot be easily inserted into the magnet insertion slot provided in the rotor iron core. An end of each magnet insertion slot on the internal diameter side of the rotor is parallel to the center of the magnetic pole. This shape causes stress concentration on the corners of the magnet insertion slot on the internal diameter side of the rotor, so peak stress may be increased.

An object of the present invention is to provide a permanent magnet rotating machine that can reduce peak stress and leakage magnetic fluxes from magnets, can have superior electrical characteristics, and can reduce stress.

A permanent magnet rotating machine according to the present invention has a stator, in which armature windings are formed in a plurality of slots formed in a stator iron core, and also has a rotor, in which two magnet insertion slots are formed for each pole in a rotor iron core and one permanent magnet is embedded in each magnet insertion slot with polarity alternating for each pole; a wall at an end of the magnet insertion slot on an external diameter side of the rotor is formed so as to be parallel to the outer circumference of the rotor, and a wall at another end of the magnet insertion slot on an internal diameter side is formed in an arc shape.

More specifically, the permanent magnet rotating machine has a stator, in which armature windings are formed in a plurality of slots formed in a stator iron core, and also has a rotor, in which two magnet insertion slots are formed for each pole in an rotor iron core in a V shape when viewed from the outer circumference of the rotor and one permanent magnet is embedded in each magnet insertion slot with polarity alternating for each pole; a wall at an end of the magnet insertion slot on an external diameter side of the rotor is formed with three arcs having different curvatures, one of the three arcs being parallel to the outer circumference of the rotor, and a wall at another end of the magnet insertion slot on an internal diameter side is formed in an arc shape.

The structure described above enables the cross sectional area of the iron core of a bridge on the external diameter side to be reduced, so leakage magnetic fluxes of magnets can be reduced. Furthermore, the width of the bridge on the external diameter side becomes constant, so stress can be distributed, preventing stress concentration and reducing peak stress. On a bridge on the internal diameter side, stress is widely distributed over the entire bridge. Therefore, when the wall at the other end of the magnet insertion slot on the internal diameter side is formed in an arc shape, this stress concentration can be prevented and peak stress can be reduced.

The permanent magnet rotating machine according to the present invention can reduce leakage fluxes from magnets, peak stress and stress, and can also have superior electrical characteristics.

Other objects and features of the present invention will be clarified in the embodiments described below.

### BRIEF DESCRIPTION OF THE DRAWINGS

FIG. 1 is a lateral cross sectional view showing a first embodiment of a permanent magnet rotating machine according to the present invention. (First embodiment)
FIG. 2 is a cross sectional view taken along line A-A' in FIG. 1. (First embodiment)
FIG. 3 is an enlarged view of one magnet insertion slot in the permanent magnet rotating machine shown in FIG. 2. (First embodiment)
FIGs. 4A to 4D show rotor shapes to compare the shape of the magnet insertion slot in the permanent magnet rotating machine according to the present invention with other magnet insertion slots. (First embodiment)
FIG. 5 shows a rotor iron core for half of one pole to illustrate an effect of the present invention.

### (First embodiment)

FIG. 6 is a characteristic graph that represents peak stress when a curvature, near the center of the magnetic pole, on the wall at an end on the external diameter side of the magnet insertion slot in the present invention is smaller than, equal to, and larger than a curvature near an part between magnetic poles.

### (First embodiment)

FIG. 7 is a characteristic graph that represents peak stress when the width of the magnet insertion slot in the present invention is smaller than, equal to, and larger than the shortest distance between the magnet insertion slot and the inner circumference of the rotor.

### (First embodiment)

FIG. 8 is a characteristic graph that represents peak stress and current when the shortest distance between the magnet insertion slot in the present invention and the center of the magnetic pole is smaller than, equal to, and larger than the shortest distance between the magnet insertion slot and the center of a quadrature axis. (First embodiment)
FIG. 9 is a characteristic graph that represents peak stress exerted to a bridge on the external diameter side and a bridge on the internal diameter side when the width of the magnet insertion slot in the present invention is changed. (First embodiment)
FIG. 10 is a characteristic graph that represents peak stress exerted to the bridge on the external diameter side and the bridge on the internal diameter side when the shortest distance between the magnet insertion slot and the inner circumference of the rotor is changed. (First embodiment)
FIG. 11 shows a second embodiment of the permanent magnet rotating machine according to the present invention, the figure being equivalent to FIG. 2.

### (Second embodiment)

FIG. 12 is an enlarged view of a magnet insertion slot in the second embodiment. (Second embodiment)
FIG. 13 is an enlarged view of a variation of the magnet insertion slot shown in FIG. 12. (Second embodiment)
FIG. 14 shows a third embodiment of the permanent magnet rotating machine according to the present invention, the figure being equivalent to FIG. 2.

### (Third embodiment)

FIG. 15 shows a fourth embodiment of the permanent magnet rotating machine according to the present invention, the figure being equivalent to FIG. 2.

### (Fourth embodiment)

FIG. 16 is a cross sectional view, in the axial direction, of the permanent magnet rotating machine in the embodiments of the present invention.
FIG. 17 is a cross sectional view, in the axial direction, of the permanent magnet rotating machine having a cantilevered structure in the embodiments of the present invention.
FIG. 18 shows a fifth embodiment of the permanent magnet rotating machine according to the present invention, the figure being equivalent to FIG. 2.

### (Fifth embodiment)

FIG. 19 shows a sixth embodiment of the permanent magnet rotating machine according to the present invention, the figure being equivalent to FIG. 2.

### (Sixth embodiment)

FIG. 20 is a block diagram showing the structure of a hybrid drive vehicle system in which the permanent magnet rotating machine according to the present invention is used. (Seventh embodiment)
FIG. 21 is a block diagram showing the structure of a wind power generating system in which the permanent magnet rotating machine according to the present invention is used. (Eighth embodiment)

### DESCRIPTION OF THE PREFERRED EMBODIMENTS

Embodiments of the present invention will be described below with reference to the drawings. In the drawings, like elements are denoted by like reference numerals.

### [First embodiment]

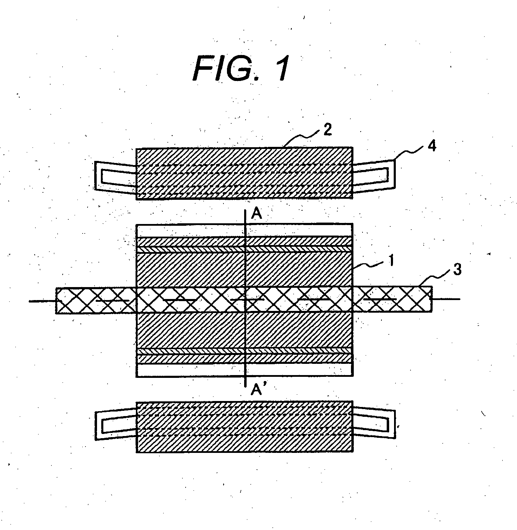

FIG. 1 schematically shows the structure of a permanent magnet rotating machine with an output power of 1 to 3 MW that will be mounted in an electrical train as a railroad generator and will operate at a rotational speed of 500 min⁻¹ to 2000 min⁻¹.

As shown in the drawing, a rotor 1, in which permanent magnets are provided, is attached to a shaft 3, and a stator 2 is oppositely disposed with a predetermined distance left between the rotor 1 and stator 2. A coil 4 is embedded in the stator 2.

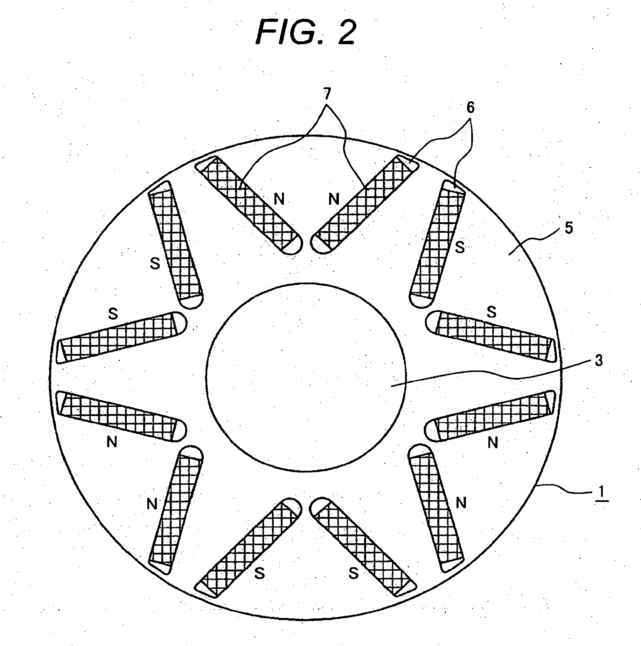

As shown in FIG. 2, the rotor 1 includes a rotor iron core 5, in which magnet insertion slots 6 are formed so that each two magnet insertion slots 6 with the same pole form a substantially V shape when viewed from the outer circumference of the rotor 1. Specifically, the two magnet insertion slots 6 formed in one pole are formed in a substantially V shape in which the circumferential distance therebetween becomes larger as the two magnet insertion slots extend toward the outer circumference of the rotor 1. A flat-plate magnet 7, which is a permanent magnet, is embedded in each magnet insertion slot 6.

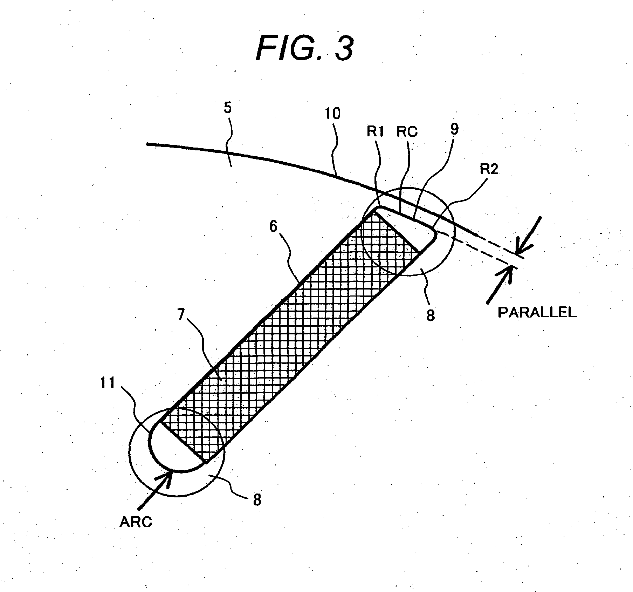

FIG. 3 is an enlarged view of the magnet insertion slot 6.

As shown in FIG. 3, both ends 8 of the magnet insertion slot 6, in which the flat-plate magnet 7 is embedded, are void. In this embodiment, a wall 9 at an end on the external diameter side of the magnet insertion slot 6 is formed with three arcs R1, RC, and R2, which have different curvatures. The arc RC at the center of the wall 9 is parallel to an outer rotor circumference 10. A wall 11 at another end on the internal diameter side of the magnet insertion slot 6 is formed in a semicircular shape.

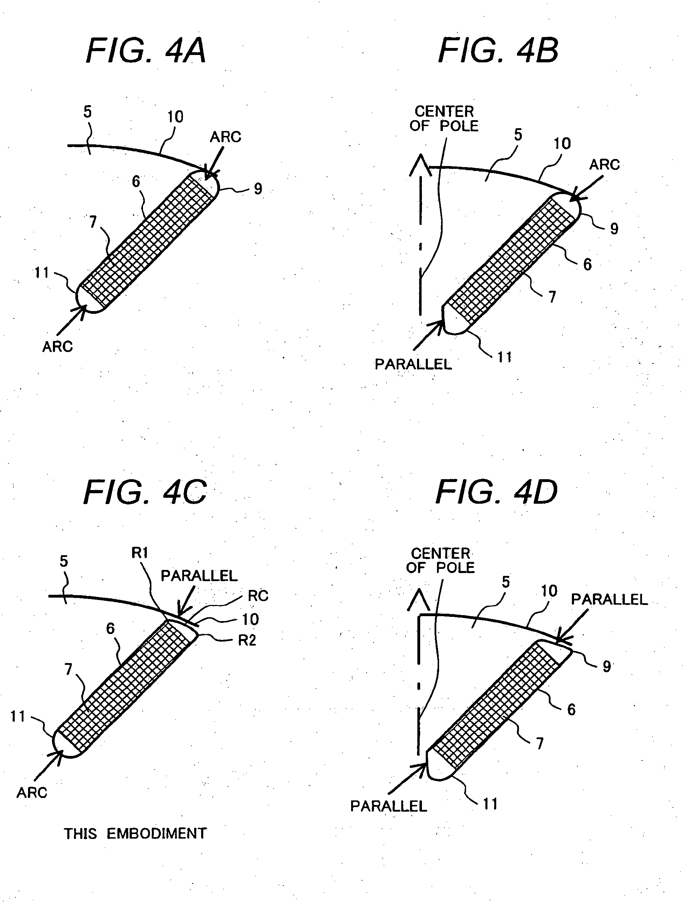

Effects in the first embodiment will be described with reference to FIGs. 4A to 4D and Tables 1 and 2.

FIGs. 4A to 4D compare rotor shapes. For the rotor in FIG. 4A, the wall 9 at the end on the external diameter side of the magnet insertion slot 6 and the wall 11 at the end on the internal diameter side are both semicircular. For the rotor in FIG. 4B, the wall 9 at the end on the external diameter side of the magnet insertion slot 6 is semicircular, the wall 11 at the end on the internal diameter side is circular, and part of the wall 11 is parallel to the center of the magnetic pole. For the rotor in FIG. 4C, the wall 9 at the end on the external diameter side of the magnet insertion slot 6 is formed with three arcs having different curvatures, the central arc being parallel to the outer rotor circumference 10, and the wall 11 at the end on the internal diameter side of the magnet insertion slot 6 is semicircular (this shape is used in this embodiment). For the rotor in FIG. 4D, the wall 9 at the end on the external diameter side of the magnet insertion slot 6 is formed with three arcs having different curvatures, the central arc being parallel to the outer rotor circumference 10, the wall 11 at the end on the internal diameter side of the magnet insertion slot 6 is circular, and part of the wall 11 is parallel to the center of the magnetic pole.

Table 1 compares peak stress exerted to rotors having the shapes shown in FIGs. 4A to 4D. The peak stress in Table 1 is represented in pu with the peak stress in FIG. 4A taken as 1.0. As is clear from Table 1, the shape in FIG. 4C, which is used in this embodiment, can reduce the peak stress the most. This is because since the wall 9 at the end on the external diameter side of the magnet insertion slot 6 is formed with the three arcs, denoted R1, RC, and R2, having different curvatures and the arc RC at the center is parallel to the outer rotor circumference 10, the width of the bridge on the external diameter side becomes constant and thereby the stress is dispersed, preventing stress concentration and reducing the peak stress. On the bridge on the internal diameter side, stress is widely distributed over the entire bridge. Therefore, when the end on the internal diameter side of the magnet insertion slot 6 is formed in a semicircular arc shape, the concentration of the stress can be prevented and the peak stress can be reduced.

[Table 1]

**Table 1**

| Shape | Peak stress |
|---|---|
| a | 1.00 |
| b | 1.09 |
| c (this embodiment) | 0.85 |
| d | 0.95 |

Table 2 compares no-load inductive voltage (which is increased when the leakage magnetic flux is small) between shapes in FIGs. 4A and 4C. The no-load inductive voltage in Table 2 is represented in pu with the no-load inductive voltage in FIG. 4A taken as 1.0. As is clear from Table 2, since, as in this embodiment, the wall 9 at the end on the external diameter side of the magnet insertion slot 6 is formed with the three arcs R1, RC, and R2 having different curvatures, the arc RC at the center being parallel to the outer rotor circumference 10, and the wall 11 at the end on the internal diameter side of the magnet insertion slot 6 is shaped in a semicircular arc, the no-load inductive voltage is increased, indicating that the leakage magnetic flux is reduced.

[Table 2]

**Table 2**

| Shape | No-load inductive voltage |
|---|---|
| a | 1.00 |
| c (this embodiment) | 1.03 |

Accordingly, when compared with the structure shown in FIG. 4A, the structure in this embodiment can reduce leakage fluxes and peak stress; when compared with the structures shown in FIGs. 4B and 4D, the structure in this embodiment can reduce peak stress.

This embodiment can be efficiently used under the conditions described below.

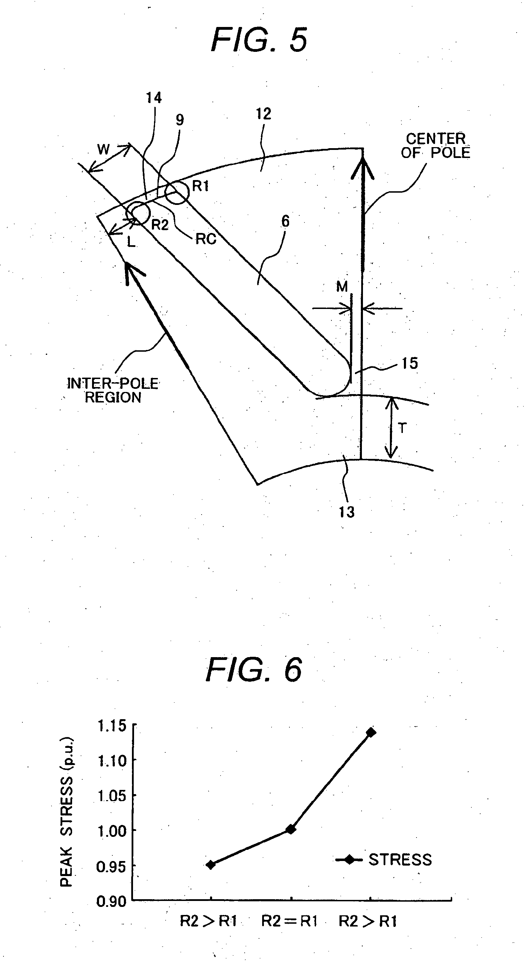

FIG. 5 shows a rotor iron core 12 for half of one pole. As shown in FIG. 5, the wall 9 at the end on the external diameter side of the magnet insertion slot 6 has a curvature denoted R1 that is near the center of the magnetic pole and a curvature denoted R2 near the part between magnetic poles. The width of the magnet insertion slot 6 is denoted W. The shortest distance between the magnet insertion slot 6 and the inner rotor circumference 13 is denoted T. The shortest distance between the magnet insertion slot 6 and the center of the magnetic pole is denoted M. The shortest distance between the magnet insertion slot 6 and the center of the quadrature axis is denoted L.

In graphs described below, the peak stress represented in pu takes a value of 1.0 when R2 is equal to R1, W is equal to T, and L is equal to M.

First, FIG. 6 shows peak stress when R1 is smaller than, equal to, and larger than R2. It is found from FIG. 6 that peak stress when R2 is smaller than R1 is higher than when R1 is equal to R2. Accordingly, R2 is preferably larger than or equal to R1.

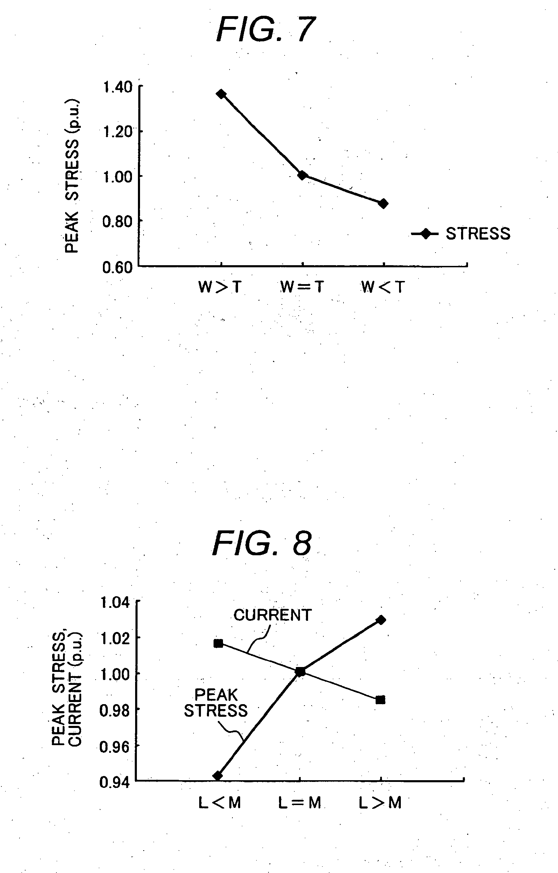

Next, FIG. 7 shows peak stress when W is smaller than, equal to, and larger than T. FIG. 7 indicates that peak stress when T is smaller than W is higher than when T is equal to W. This is because when T is small, large stress is exerted to the bridge on the external diameter side. Accordingly, W is preferably smaller than or equal to T.

Next, FIG. 8 shows peak stress and current when M is smaller than, equal to, and larger than L. Current values in the drawing are values measured under the same output condition. As the current value is reduced, copper loss is reduced, improving the efficiency and power factor, so it can be said that the electrical characteristics are superior. FIG. 8 indicates that stress when L is larger than M is higher than when L is equal to M, but current under this condition is reduced. Since the electrical characteristics are improved by reducing M, there are a few cases in which L is smaller than M. Accordingly, to improve electrical characteristics, L is preferably larger than or equal to M.

Therefore, conditions to efficiently use this embodiment is that R2 is larger than or equal to R1, W is smaller than or equal to T, and L is larger than or equal to M.

Appropriate values of W and T in FIG. 5 will be described below.

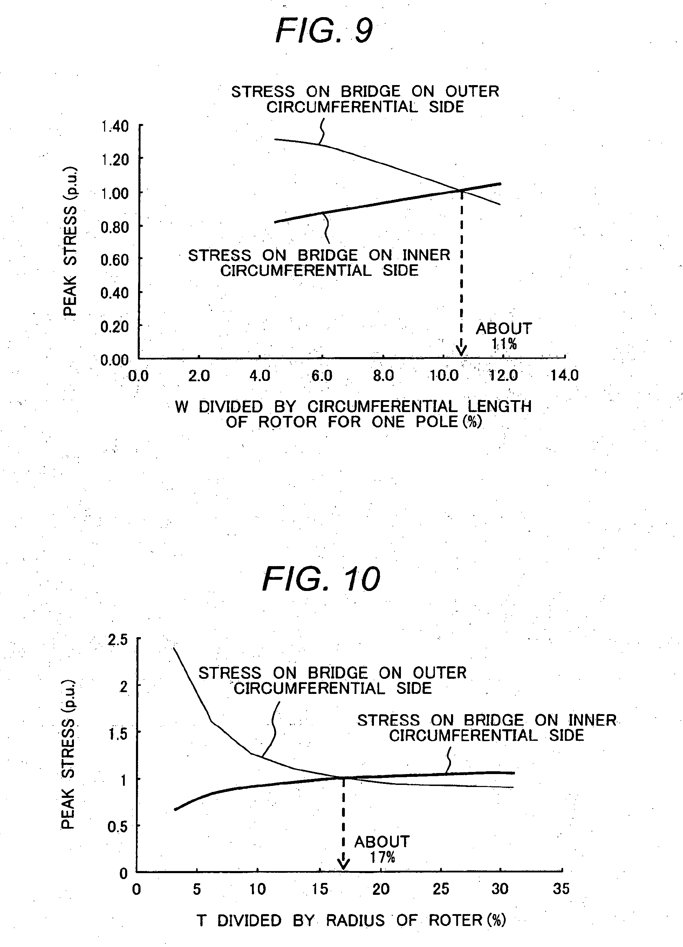

FIG. 9 indicates stress exerted to a bridge 14 on the external diameter side and a bridge 15 on the internal diameter side when the value of W is changed. The stress in FIG. 9 is represented in pu and takes a value of 1.0 when peak stress on the bridge 14 is equal to peak stress on the bridge 15.

It is found from FIG. 9 that when W is increased, the stress on the bridge 14 on the external diameter side is reduced and the stress on the bridge 15 on the internal diameter side is increased. Specifically, since the stress on the bridge 14 on the external diameter side can be more dispersed as W becomes larger, the peak stress can be reduced. Since the magnets are enlarged, however, the centrifugal force is increased and the stress on the bridge 15 on the internal diameter side is increased. In this embodiment, the peak stress on the entire rotor can be minimized when W divided by the circumferential length of the rotor for one pole is about 11%. Accordingly, the value of W divided by the circumferential length of the rotor for one pole is preferably in the vicinity of 11%.

FIG. 10 indicates stress exerted to the bridge 14 on the external diameter side and to the bridge 15 on the internal diameter side when the value of T is changed. The stress in FIG. 10 is represented in pu and takes a value of 1.0 when peak stress on the bridge 14 is equal to peak stress on the bridge 15.

It is found from FIG. 10 that when W is increased, the stress on the bridge 14 on the external diameter side is reduced and the stress on the bridge 15 on the internal diameter side is increased, these stresses become equal when T divided by the radius of the rotor is in the vicinity of 17%, and the stresses remain unchanged when 17% is exceeded. This is because when T is small, deformation is likely to occur due to the centrifugal force, so the stress on the bridge 14 on the external diameter side is increased. Conversely, when T is large, deformation does not easily occur. However, stress easily concentrates on the bridge 15 on the internal diameter side, which is less likely to be deformed, so the stress on the bridge 15 on the internal diameter side is increased. Accordingly, in this embodiment, the peak stress becomes small when T divided by the radius of the rotor is in the vicinity of 17%.

Although six poles are shown in the drawing, it will be appreciated that the use of any other number of poles can provide the same effect. The coils in this embodiment are embedded in the stator by distributed winding, but concentrated winding can also provide the same effect.

### [Second embodiment]

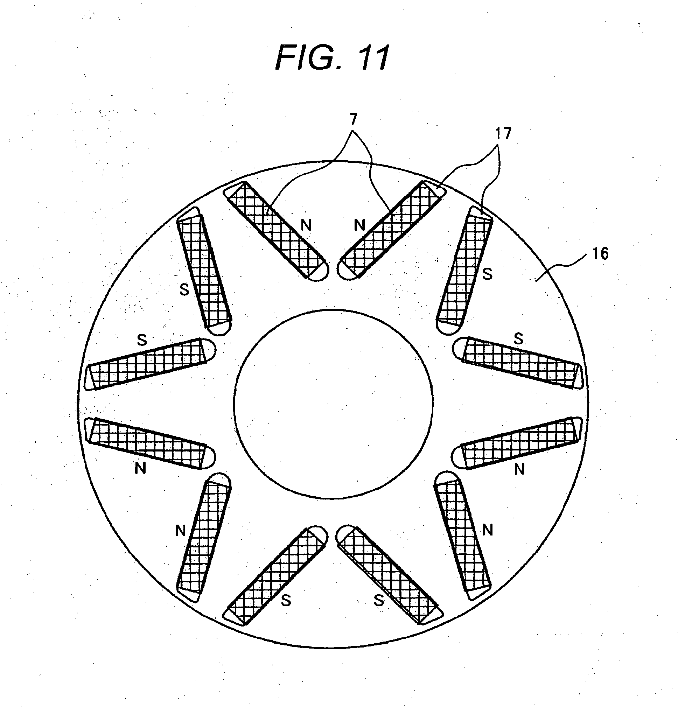

FIG. 11 shows the rotor of a six-pole permanent magnet rotating machine according to a second embodiment of the present invention. As shown in the drawing, the permanent magnet rotor includes a rotor iron core 16, in which magnet insertion slots 17 are formed so that two magnet insertion slots 17 form a substantially V shape for each pole when viewed from the outer circumference of the rotor, and a flat-plate magnet 7 is embedded in each magnet insertion slot 17.

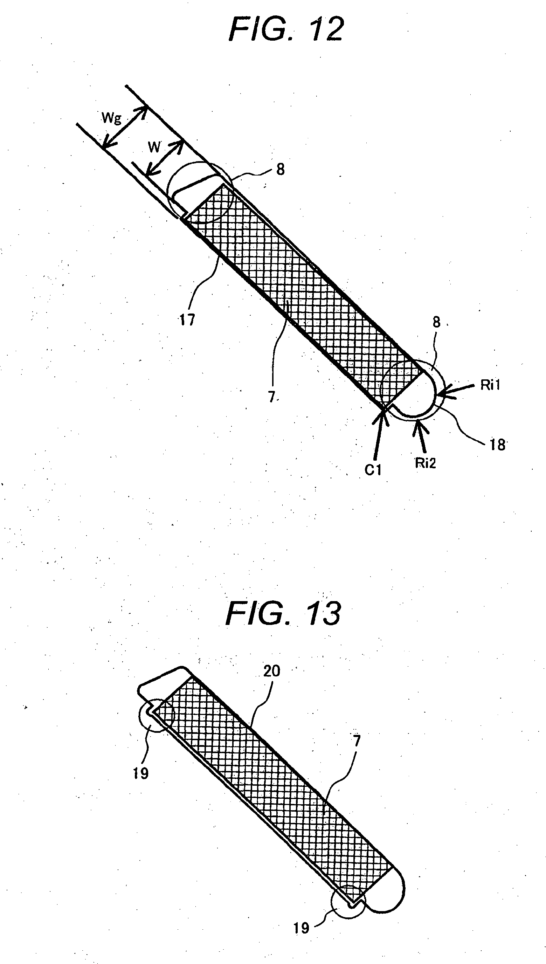

FIG. 12 is an enlarged view of the magnet insertion slot 17. In this embodiment, to form a step, the width W of an end 8 of the magnet insertion slot 17 is smaller than the width Wg of a magnet insertion portion.

In this embodiment, a range in which the flat-plate magnet 7 moves in the width direction is narrowed by the step. Accordingly, when the rotor rotates, movement of the flat-plate magnet 7 in the magnet insertion slot 17 can be suppressed, preventing the magnet from being damaged due to vibration and shock. When the flat-plate magnet 7 is inserted into the rotor iron core 16, movement of the flat-plate magnet 7 in the magnet insertion slot 17 can also be suppressed, improving the productivity of the rotor.

Since W is smaller than Wg, however, an angular part C1 is formed in the magnet insertion slot 17, in correspondence to an angular part of the flat-plate magnet 7. Stress exerted to the angular part C1 is then increased. To solve this problem, an end wall 18 of the magnet insertion slot 17 on the internal diameter side may be formed by combining two arcs having different curvatures Ri1 and Ri2.

Then, the stress exerted to the angular part C1 can be distributed to the part having the curvature Ri2, so the stress to the angular part C1 can be reduced, enabling the peak stress over the entire rotor to be reduced. To efficiently reduce stress, Ri1 is preferably larger than Ri2.

Furthermore, a magnet insertion slot 20 may be used, which is hollowed out at a part 19, as shown in FIG. 13, at which the angular part of the flat-plate magnet 7 of the rotor iron core is brought into contact, in such a way that the curvature of the hollowed-out part is larger than the curvature of the angular part of the flat-plate magnet 7.

Since the angular part of the magnet insertion slot 20 has a larger curvature than the angular part of the flat-plate magnet 7, the angular part of the magnet does not locally touch the rotor iron core and thereby the peak stress can be reduced.

The positional relationship between the magnet insertion slots 17 and 20 and the rotor iron core 16 and their sizes are the same as in the first embodiment. Although six poles are shown in the drawing, it will be appreciated that the use of any other number of poles can provide the same effect.

### [Third embodiment]

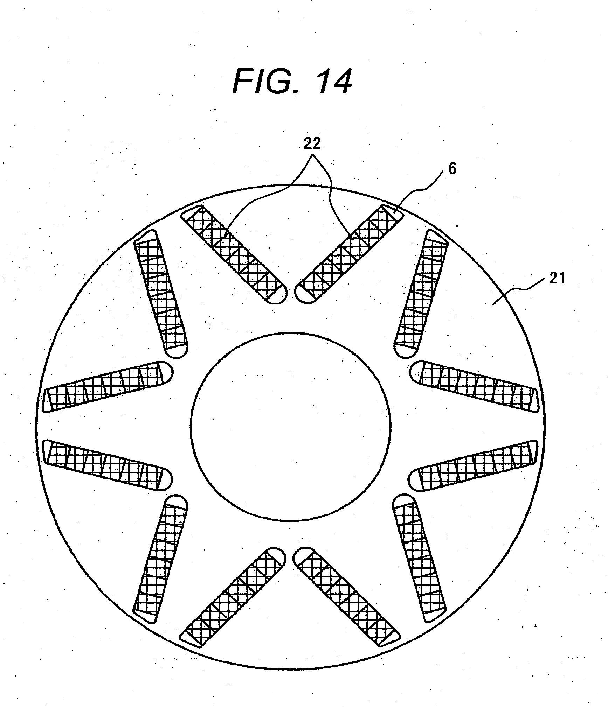

In addition to the structures in the first and second embodiments, permanent magnets 22 disposed in a rotor iron core 21 are divided in the width direction as shown in FIG. 14, in this embodiment. This enables the eddy current generated in each permanent magnet 22 to be reduced, and thereby the efficiency can be improved and the temperature in the permanent magnet rotating machine can be reduced. Even if the permanent magnet 22 is divided in the axial direction, the same effect can be obtained.

### [Fourth embodiment]

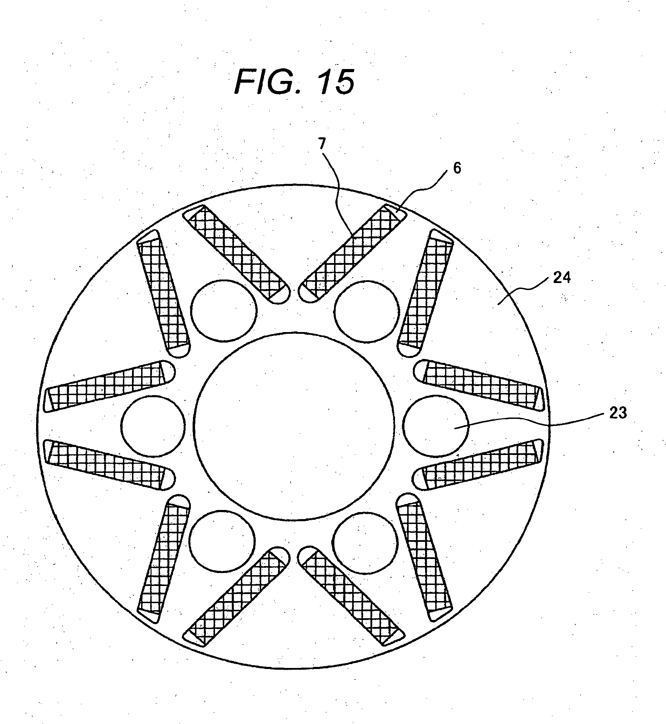

In addition to the structures in the first to third embodiments, as shown in FIG. 15, axial ducts 23 for draft cooling, through which cooling air passes in the axial direction of a rotor iron 24, are provided on the internal diameter side of magnet insertion slots 6.

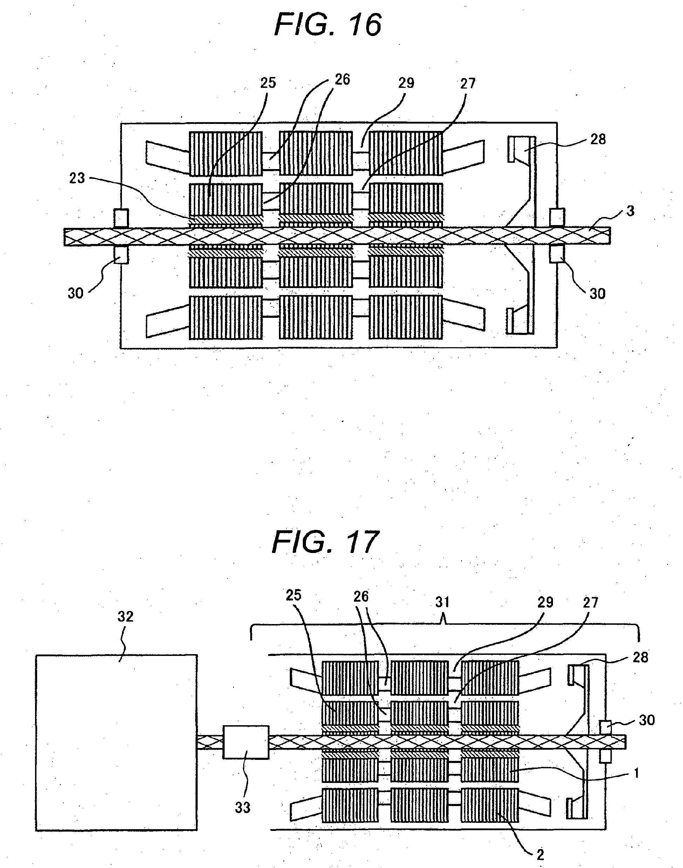

In this structure, a duct space 27 is formed by duct pieces 26 provided among rotor iron cores 25 formed by laminating thin steel plates and among stator iron cores formed by laminating thin steel plates, as shown in FIG. 16, which shows the cross section of the permanent magnet rotating machines in the axial direction in the first to third embodiment. Cooling air from a fan 28 is expelled from the axial duct 23 used for draft cooling to a duct space 29 of the stator through the duct space 27, and cooling can be carried out efficiently.

Even when the axial duct 23 for draft cooling and duct spaces 27 and 29 are provided, the effects described in the first to third embodiment can be expected.

Although, in this embodiment, two duct pieces 26 are disposed in each of the axial directions of the permanent magnet rotor and stator, any other number of duct pieces 26 may be disposed. Although the duct pieces 26 are disposed for both the rotor 1 and stator 2, they may be disposed only for the stator 2.

A permanent magnet rotating machine 31 having a cantilevered structure, in which a single bearing 30 supports the shaft 3 as shown in FIG. 17, may be used.

When the permanent magnet rotating machine 31 having a cantilevered structure is connected to an engine 32 through a coupling 33, it is possible to prevent the rotor 1 from being brought into contact with the stator 2 even with the bearing 30 disposed on one side. Furthermore, the number of bearings can be reduced, so the cost and weight of the permanent magnet rotating machine 31 can be reduced.

### [Fifth embodiment]

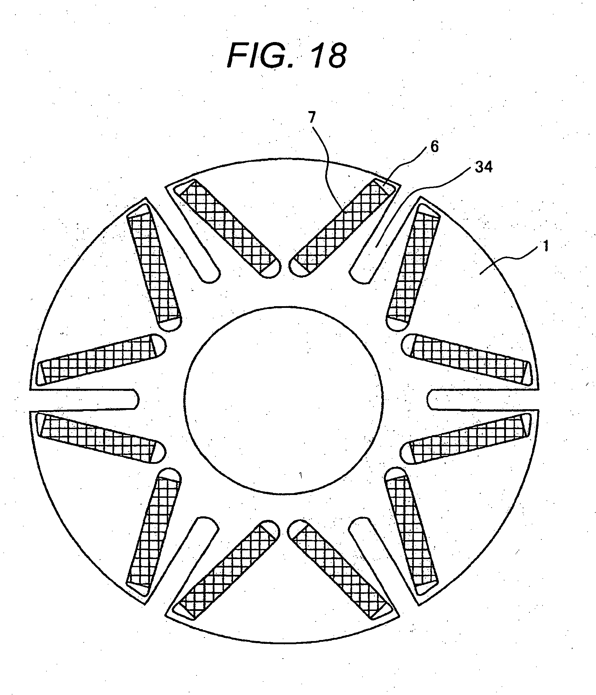

In addition to the structures in the first to fourth embodiments, cooling ventilation paths 34 are provided between the poles of the rotor 1 as shown in FIG. 18, the ventilation path 34 extending in the axial direction of the rotor 1 from its outer circumference toward its inner circumference.

When the cooling ventilation paths 34 are formed as described above, a cooling area of the rotor 1 is expanded and thereby the temperature of the rotor 1 can be lowered. Cooling air can efficiently flow from the rotor 1 to the stator 2 due to fan action, enabling the temperature in the permanent magnet rotating machine to be leveled. Furthermore, since the harmonic components of fluxes entering the rotor 1 from a part between the poles, eddy currents generated in the magnets can be reduced, efficiency can be increased, and the temperature in the permanent magnet rotating machine can be reduced.

### [Sixth embodiment]

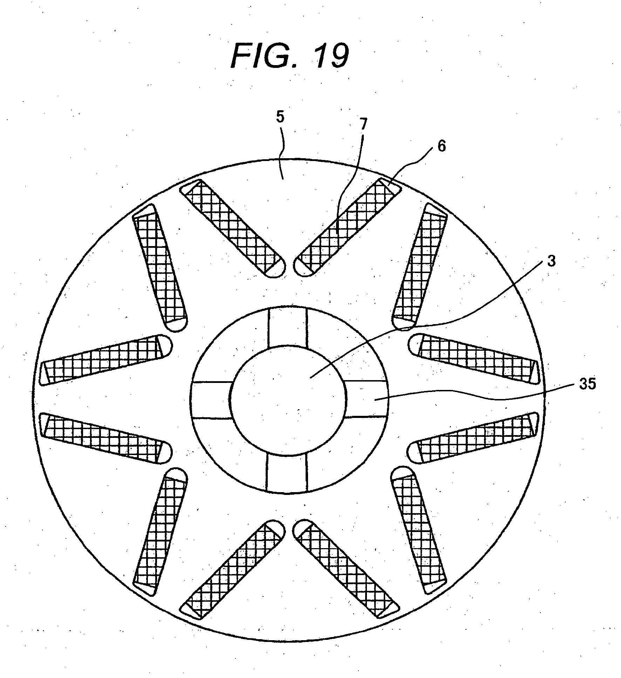

In addition to the structures in the first to fifth embodiments, a plurality of (four) shaft arms 35 are provided between the rotor iron core 5 and the shaft 3, with a predetermined spacing therebetween in the circumferential direction, as shown in FIG. 19.

When the shaft arms 35 are disposed as described above, the outer diameter of the shaft 3 can be reduced while maintaining the same strength as when the shaft arms 35 are not provided. Therefore, the entire weight of the rotary electrical machine can be reduced. Although four shaft arms 35 are used in this embodiment, any other number of shaft arms 35 may be used.

### [Seventh embodiment]

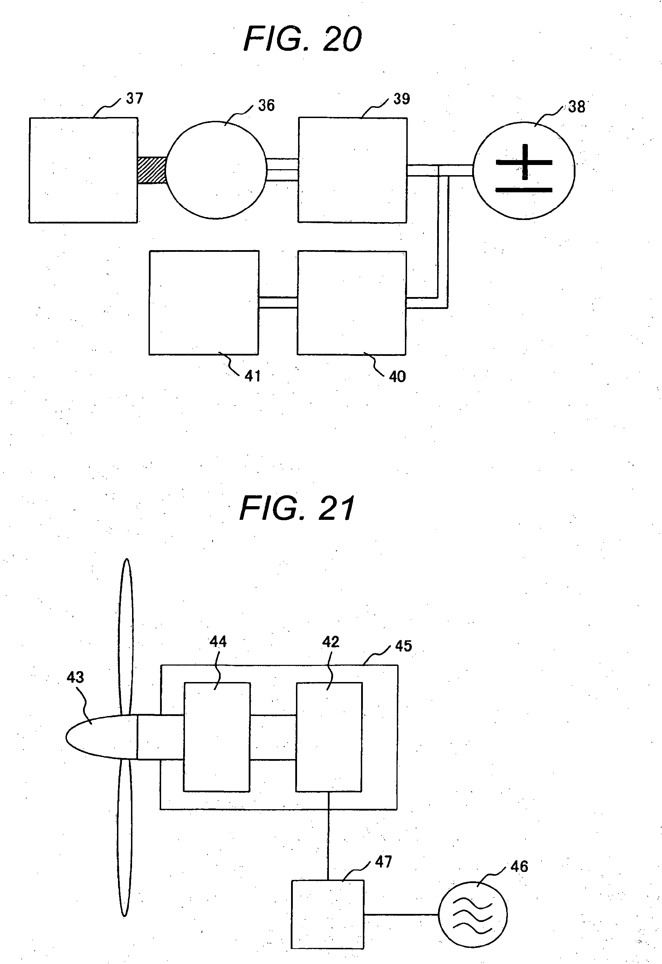

FIG. 20 shows an example in which the permanent magnet rotating machine according to the present invention is applied to a hybrid drive vehicle system.

The permanent magnet rotating machine 36 described in the first to sixth embodiments is connected directly to an engine 37 and mounted in a power car vehicle. The permanent magnet rotating machine 36 is also connected to an electrical power system 38 through a power converter 39 to generate electrical power. A battery 41 is connected between the electrical power system 38 and power converter 39 through a battery chopper 40.

The permanent magnet rotating machine according to the present invention 36 has improved electrical characteristics, so it is possible to reduce its weight and increase its efficiency in comparison with conventional rotational electrical machines, enabling the fuel efficiency of the entire vehicle system to be increased. It is also possible to operate the permanent magnet rotating machine 36 by using the engine 37 without mounting the battery chopper 40 and battery 41 and to supply power generated by the operation to the electrical power system 38 for an operation.

### [Eighth embodiment]

FIG. 21 shows an example in which the permanent magnet rotating machine according to the present invention is applied to a wind power generating system.

The permanent magnet rotating machine 42 described in the first to sixth embodiments is connected to a windmill 43 through a speed-up gear 44 and mounted in a nacelle 45. The permanent magnet rotating machine 42 is also connected to an electrical power system 46 through a power converter 47 to generate electrical power. It is also possible to directly interconnect the windmill 43 and permanent magnet rotating machine 42.

The permanent magnet rotating machine 42 has improved electrical characteristics, so it is possible to increase its efficiency in comparison with conventional rotational electrical machines, enabling the efficiency of the power generating system to be increased. Although, in the present invention, wind is used as the power source, a water mill, engine, and turbine can be adequately applied.

## Claims

1. A permanent magnet rotating machine having a stator (2), in which armature windings are formed in a plurality of slots formed in at least one stator iron core, and also having a rotor (1), in which two magnet insertion slots (6) are formed for each pole in at least one rotor iron core (5) in a V shape when viewed from the outer circumference of the rotor (1) and one permanent magnet (7) is embedded in each magnet insertion slot (6) with polarity alternating for each pole, wherein:
a wall (9) at an end on an external diameter side of the magnet insertion slot (6) is formed with three arcs (R1, RC, RC) having different curvatures,
the arcs being denoted R1, RC, and R2 in the order from the center of a pole toward an part between magnetic poles, RC being parallel to the outer circumference (10) of the rotor (1), the curvature of R2 being larger than the curvature of R1; and
a wall (11) at another end on an internal diameter side of the magnet insertion slot (6) is formed in a semicircular shape.

2. A permanent magnet rotating machine according to claim 1 **characterized in that** when a shortest distance between an part between magnetic poles and the wall (9) at the end of the magnet insertion slot on the outer circumferential side side of the rotor (1) is denoted L and a shortest distance between the center of the pole and the wall (11) at the end of the magnet insertion slot (6) on the inner circumferential side of the rotor is denoted M; L is larger than M.

3. A permanent magnet rotating machine according to claim 1 or 2, **characterized in that** when the width of the magnet insertion slot (6) is denoted W, and a shortest distance between the magnet insertion slot (6) and a circumference along which the rotor (1) and a rotational axis are mutually linked being denoted T; T is larger than W.

4. The permanent magnet rotating machine according to any one of claims 1 to 3, wherein the two magnet insertion slots (6) formed for each pole in at least one rotor iron core (5) in a V shape when viewed from the outer circumference (10) of the rotor (1) are formed in a V shape so that a circumferential distance therebetween becomes larger as the two magnet insertion slots extend toward the outer circumference (10) of the rotor (1).

5. The permanent magnet rotating machine according to any one of claims 1 to 4, wherein a step (19) is formed at a wall at an end of the magnet insertion slot (6) on a part between magnetic poles side.

6. The permanent magnet rotating machine according to claim 5, wherein a corner (19) of the step formed on the wall (11, 18) at the end of the magnet insertion slot (6) on the part between magnetic poles side is hollowed out.

7. The permanent magnet rotating machine according to any one of claims 1 to 6, wherein the permanent magnet (7) is divided in an axial direction thereof.

8. The permanent magnet rotating machine according to any one of claims 1 to 7, wherein the permanent magnet (7) is divided in a width direction thereof.

9. The permanent magnet rotating machine according to any one of claims 1 to 8, wherein an axial duct (23) for draft cooling, through which cooling air axially passes, is provided in at least one rotor iron core (25) on the internal diameter side of the magnet insertion slots (6).

10. The permanent magnet rotating machine according to any one of claims 1 to 9, wherein a circumferential space (27) is formed by disposing duct pieces among the rotor iron cores (25) formed by laminating thin steel plates and among the stator iron cores (2) formed by laminating thin steel plates, the circumferential space (27) being used as a radial duct.

11. The permanent magnet rotating machine according to any one of claims 1 to 10, wherein a cooling ventilation path (29) is provided between the poles of the rotor (1), and the ventilation path (29) extends in the axial direction of the rotor (1) from the outer circumference toward the inner circumference.

12. The permanent magnet rotating machine according to any one of claims 1 to 11, wherein a plurality of shaft arms (35) are provided between the rotor iron core (5) and a rotational axis, with a predetermined spacing therebetween in a circumferential direction.

13. The permanent magnet rotating machine according to any one of claims 1 to 12, wherein the diameter of said semicircular shape of the wall (11) on the an internal diameter side is equal or smaller than a width W of the magnet insertion slot (6).

14. A hybrid drive vehicle system having an engine (37), a rotating machine (36), a power converter (39) disposed between the rotating machine and an electrical power system (38), and a battery which is connected between the power converter and an electrical power system through a battery chopper, wherein the rotating machine is the permanent magnet rotating machine described in any one of claims 1 to 13.

15. A wind turbine generating system having a windmill (43), a rotating machine (42) connected to the windmill and disposed in a nacelle (45), and a power converter (47) disposed between the rotating machine (42) and an electrical power system (46), wherein the rotating machine (42) is the permanent magnet rotating machine described in any one of claims 1 to 13.

## Patentansprüche

1. Drehmaschine mit einem Permanentmagnet, welche über einen Stator (2) verfügt, in welchem in mindestens einem Stator-Eisenkern Ankerwicklungen in einer Vielzahl von Schlitzen ausgeformt sind, und welche auch über einen Rotor (1) verfügt, in welchem zwei Magneteinführungsschlitze (6) ausgebildet sind für jeden Pol in mindestens einem Stator-Eisenkern (5) in V-Form aus Sicht des Außenumfangs des Rotors (1), sowie in dem in jedem der Magneteinführungsschlitze (6) ein Permanentmagnet (7) mit für jeden Pol abwechselnder Polarität eingebettet ist, wobei:
an einem Ende der Außendurchmesser-Seite des Magneteinführungsschlitzes (6) eine Wand (9) mit drei Bögen (R1, RC, RC) mit unterschiedlicher Krümmung ausgebildet ist,
wobei die Bögen in der Reihenfolge vom Zentrum eines Pols zu einem Teil zwischen den Magnetpolen hin als R1, RC und R2 benannt sind, wobei RC parallel zum Außenumfang (10) des Rotors (1) liegt, die Krümmung von R2 größer ist als die Krümmung von R1; und
eine Wand (11) am anderen Ende der Innendurchmesser-Seite des Magneteinführungsschlitzes (6) in Form eines Halbkreises ausgebildet ist.

2. Die Drehmaschine mit einem Permanentmagnet nach Anspruch 1, **dadurch gekennzeichnet, dass**, wenn die kürzeste Distanz zwischen einem Teil zwischen den Magnetpolen und der Wand (9) am Ende des Magneteinführungsschlitzes auf der Außenumfangsseite des Rotors (1) mit L benannt ist, und die kürzeste Distanz zwischen dem Zentrum des Pols und der Wand (11) am Ende des Magneteinführungsschlitzes (6) auf der Innenumfangsseite des Rotors mit M benannt ist, L größer ist als M.

3. Die Drehmaschine mit einem Permanentmagnet nach Anspruch 1 oder 2, **dadurch gekennzeichnet, dass**, wenn die Breite des Magneteinführungsschlitzes (6) mit W benannt ist, und die kürzeste Distanz zwischen dem Magneteinführungsschlitz (6) und einem Umfang, entlang welchem der Rotor (1) und eine Rotationsaxe miteinander verbunden sind, mit T benannt ist, T größer als W ist.

4. Die Drehmaschine mit einem Permanentmagnet nach irgendeinem der Ansprüche 1 bis 3, wobei die beiden Magneteinführungsschlitze (6), welche für jeden Pol in mindestens einem Stator-Eisenkern (5) in V-Form aus Sicht des Außenumfangs (10) des Rotors (1) ausgebildet sind, in V-form ausgebildet sind, sodass die Distanz dazwischen in Umfangsrichtung größer wird, wenn sich die beiden Magneteinführungsschlitze in Richtung des Außenumfangs (10) des Rotors (1) nach außen bewegen.

5. Die Drehmaschine mit einem Permanentmagnet nach irgendeinem der Ansprüche 1 bis 4, wobei an einer Wand am Ende des Magneteinführungsschlitzes (6) auf einem Teil der Seite zwischen den Magnetpolen eine Stufe (19) ausgebildet ist.

6. Die Drehmaschine mit einem Permanentmagnet nach Anspruch 5, wobei eine Ecke (19) der Stufe, welche auf der Wand (11, 18) am Ende des Magneteinführungsschlitzes (6) auf einem Teil der Seite zwischen den Magnetpolen ausgebildet ist, ausgespart ist.

7. Die Drehmaschine mit einem Permanentmagnet nach irgendeinem der Ansprüche 1 bis 6, wobei der Permanentmagnet (7) in Axialrichtung geteilt ist.

8. Die Drehmaschine mit einem Permanentmagnet nach irgendeinem der Ansprüche 1 bis 7, wobei der Permanentmagnet (7) in Breitenrichtung geteilt ist.

9. Die Drehmaschine mit einem Permanentmagnet nach irgendeinem der Ansprüche 1 bis 8, wobei in mindestens einem Rotor-Eisenkern (25) auf der Innendurchmesser-Seite der Magneteinführungsschlitze (6) zum Zwecke der Luftkühlung ein Axialkanal (23) vorgesehen ist, durch welchen in axialer Richtung Kühlluft strömt.

10. Die Drehmaschine mit einem Permanentmagnet nach irgendeinem der Ansprüche 1 bis 9, wobei ein umgebender Raum (27) ausgebildet wird, indem Luftkanalstücke zwischen den Rotor-Eisenkernen (25) angeordnet werden, welche durch das Laminieren dünner Stahlplatten ausgebildet werden, und zwischen den Strator-Eisenkernen (2) angeordnet werden, welche durch das Laminieren dünner Stahlplatten ausgebildet werden, wobei der umgebende Raum (27) als Radialkanal dient.

11. Die Drehmaschine mit einem Permanentmagnet nach irgendeinem der Ansprüche 1 bis 10, wobei zwischen den Polen des Rotors (1) ein Kühl-Belüftungsweg (29) vorgesehen ist, und der Kühl-Belüftungsweg (29) sich in axialer Richtung des Rotors (1) vom Außenumfang in Richtung des Innenumfangs erstreckt.

12. Die Drehmaschine mit einem Permanentmagnet nach irgendeinem der Ansprüche 1 bis 11, wobei zwischen dem Rotor-Eisenkern (5) und der Rotationsaxe in Umfangsrichtung eine Vielzahl von Armwellen (35), welche zueinander vorgegebene Abstände haben, vorgesehen sind.

13. Die Drehmaschine mit einem Permanentmagnet nach irgendeinem der Ansprüche 1 bis 12, wobei der Durchmesser der besagten halbkreisförmigen Wand (11) auf der Innendurchmesser-Seite kleiner oder gleichgroß ist wie die Breite W des Magneteinführungsschlitzes (6).

14. Ein Hybridantrieb-Kraftfahrzeugsystem, welches über einen Motor (37) verfügt, eine Drehmaschine (36), einen Gleichrichter (39), welcher zwischen der Drehmaschine und einem elektrischen Energieversorgungssystem (38) angeordnet ist, sowie über eine Batterie, welche zwischen dem Gleichrichter und dem elektrischen Energieversorgungssystem mittels eines Batteriechoppers geschaltet ist, wobei die Drehmaschine die Drehmaschine mit einem Permanentmagnet nach irgendeinem der Ansprüche 1 bis 13 ist.

15. Eine Windkraftanlage mit einem Windrad (43), einer Drehmaschine (42), welche mit dem Windrad verbunden ist und in einer Gondel (45) angeordnet ist, sowie ein Gleichrichter (47), welcher zwischen der Drehmaschine (42) und dem elektrischen Energieversorgungssystem (46) angeordnet ist, wobei die Drehmaschine (42) die Drehmaschine mit einem Permanentmagnet nach irgendeinem der Ansprüche 1 bis 13 ist.

## Revendications

1. Machine rotative à aimants permanents ayant un stator (2), dans laquelle des enroulements d'induit sont formés dans une pluralité de fentes formées dans au moins un noyau de fer de stator, et ayant également un rotor (1), dans laquelle deux fentes (6) d'insertion d'aimant sont formées pour chaque pôle dans au moins un noyau de fer (5) de rotor à une forme en V, vues de la circonférence extérieure du rotor (1), et un aimant permanent (7) est intégré dans chaque fente (6) d'insertion d'aimant avec une polarité alternée pour chaque pôle, dans laquelle :
une paroi (9) à une extrémité sur un côté de diamètre externe de la fente (6) d'insertion d'aimant est formée avec trois arcs (R1, RC, RC) ayant des courbures différentes, les arcs étant dénotés R1, RC, et R2 dans l'ordre à partir du centre d'un pôle vers une partie entre pôles magnétiques, RC étant parallèle à la circonférence extérieure (10) du rotor (1), la courbure de R2 étant plus grande que la courbure de R1 ;
et
une paroi (11) à une autre extrémité sur un côté de diamètre interne de la fente (6) d'insertion d'aimant est formée à une forme semi-circulaire.

2. Machine rotative à aimants permanents selon la revendication 1, **caractérisée en ce que**, lorsqu'une distance la plus courte entre une partie entre pôles magnétiques et la paroi (9) à l'extrémité de la fente d'insertion d'aimant sur le côté circonférentiel extérieur du rotor (1) est dénotée L, et qu'une distance la plus courte entre le centre du pôle et la paroi (11) à l'extrémité de la fente (6) d'insertion d'aimant sur le côté circonférentiel intérieur du rotor est dénotée M ; L est plus grande que M.

3. Machine rotative à aimants permanents selon la revendication 1 ou 2, **caractérisée en ce que**, lorsque la largeur de la fente (6) d'insertion d'aimant est dénotée W, et qu'une distance la plus courte entre la fente (6) d'insertion d'aimant et une circonférence le long de laquelle le rotor (1) et un axe de rotation sont mutuellement liés étant dénotée T ; T est plus grande que W.

4. Machine rotative à aimants permanents selon l'une quelconque des revendications 1 à 3, dans laquelle les deux fentes (6) d'insertion d'aimant formées pour chaque pôle dans au moins un coeur de fer (5) de rotor à une forme en V, vues de la circonférence extérieure (10) du rotor (1) sont formées à une forme en V de telle manière qu'une distance circonférentielle entre celles-ci devient plus grande lorsque les deux fentes d'insertion d'aimant s'étendent vers la circonférence extérieure (10) du rotor (1).

5. Machine rotative à aimants permanents selon l'une quelconque des revendications 1 à 4, dans laquelle une marche (19) est formée au niveau d'une paroi à une extrémité de la fente (6) d'insertion d'aimant sur une partie entre pôles magnétiques.

6. Machine rotative à aimants permanents selon la revendication 5, dans laquelle un angle (19) de la marche formée sur la paroi (11, 18) à l'extrémité de la fente (6) d'insertion d'aimant sur la partie entre pôles magnétiques est évidé.

7. Machine rotative à aimants permanents selon l'une quelconque des revendications 1 à 6, dans laquelle l'aimant permanent (7) est divisé dans un sens axial de celui-ci.

8. Machine rotative à aimants permanents selon l'une quelconque des revendications 1 à 7, dans laquelle l'aimant permanent (7) est divisé dans un sens de la largeur de celui-ci.

9. Machine rotative à aimants permanents selon l'une quelconque des revendications 1 à 8, dans laquelle une conduite axiale (23) pour un refroidissement par ventilation, à travers laquelle un air de refroidissement passe axialement, est prévue dans au moins un coeur de fer (25) de rotor sur le côté de diamètre interne des fentes (6) d'insertion d'aimant.

10. Machine rotative à aimants permanents selon l'une quelconque des revendications 1 à 9, dans laquelle un espace circonférentiel (27) est formé en disposant des parties de conduite parmi les coeurs de fer (25) de rotor formés par laminage de plaques minces d'acier et parmi les coeurs de fer (2) de stator formés par laminage de plaques minces d'acier, l'espace circonférentiel (27) étant utilisé comme une conduite radiale.

11. Machine rotative à aimants permanents selon l'une quelconque des revendications 1 à 10, dans laquelle un chemin de ventilation (29) de refroidissement est prévu entre les pôles du rotor (1) et le chemin de ventilation (29) s'étend dans le sens axial du rotor (1) de la circonférence extérieure vers la circonférence intérieure.

12. Machine rotative à aimants permanents selon l'une quelconque des revendications 1 à 11, dans laquelle une pluralité de bras d'arbre (35) sont prévus entre le coeur de fer (5) de rotor et un axe de rotation, avec un espacement prédéterminé entre ceux-ci dans un sens circonférentiel.

13. Machine rotative à aimants permanents selon l'une quelconque des revendications 1 à 12, dans laquelle le diamètre de ladite forme semi-circulaire de la paroi (11) sur le côté de diamètre interne est égal ou inférieur à une largeur W de la fente (6) d'insertion d'aimant.

14. Système pour véhicule à entraînement hybride ayant un moteur (37), une machine rotative (36), un convertisseur de puissance (39) disposé entre la machine rotative et un système d'alimentation électrique (38), et une batterie qui est connectée entre le convertisseur de puissance et un système d'alimentation électrique par l'intermédiaire d'un hacheur de batterie, dans lequel la machine rotative est la machine rotative à aimants permanents selon l'une quelconque des revendications 1 à 13.

15. Système de génération pour éolienne ayant une éolienne (43), une machine rotative (42) connectée à l'éolienne et disposée dans une nacelle (45) et un convertisseur de puissance (47) disposé entre la machine rotative (42) et un système d'alimentation électrique (46), dans lequel la machine rotative (42) est la machine rotative à aimants permanents selon l'une quelconque des revendications 1 à 13.
